# EUROPEAN PATENT APPLICATION

(11) **EP 4 749 848 A1**
(43) Date of publication of application: **27.05.2026**
(21) Application number: 25305286.4
(22) Date of filing: 04.03.2025
(51) Int. Cl.: H02B 11/133, H02B 11/173

(54) **INTERLOCKING APPARATUS FOR DRAWER CABINET AND DRAWER CABINET**

(30) Priority: 21.11.2024 CN 202422854120 U; 25.11.2024 CN 202422878753 U
(71) Applicant: SCHNEIDER ELECTRIC INDUSTRIES SAS, 92500 Rueil-Malmaison (FR)
(72) Inventor: ZHOU, Huidong, Shanghai 201203 (CN); GAO, Xiaochun, Shanghai 201203 (CN)
(74) Representative: Manitz Finsterwald Patent- und Rechtsanwaltspartnerschaft mbB

(57) **Abstract**

The embodiment of the present disclosure provides an interlocking apparatus (3) for a drawer cabinet and a drawer cabinet. The interlocking apparatus (3) comprises a locking mechanism (4) arranged within a drawer (2) of the drawer cabinet and comprising: a bracket (41); a driving plate (43) coupled to the bracket (41); and a locking plate (42) coupled to the driving plate (43) and slidably connected to the bracket (41) in a second direction, and exit a locking hole of a fixing portion of the drawer cabinet during sliding of the driving plate (43) from the locking position to the unlocking position; and a limiting mechanism (5) arranged within the drawer (2) and located between a handle (21) of the drawer (2) and the locking mechanism (4), comprising: a fixing plate (51) coupled to the drawer (2); a cam crank arm (52) coupled to the handle (21) and adapted to rotate with the handle (21) between an opening position and a closing position; and a limiting member coupled to the fixing plate (51).

## Description

### FIELD

Example embodiments of the present disclosure generally relate to the field of electrical equipment, and in particular, to an interlocking apparatus for a drawer cabinet and a drawer cabinet.

### BACKGROUND

The drawer cabinet is a type of power distribution equipment comprising a cabinet body frame, drawer units, a bus system, an operating mechanism, etc. It adopts a drawer-type modular design and has the characteristics of high safety, good flexibility, and easy maintenance. It is widely applied to the fields of industry, building electrical, power systems, and the like.

### SUMMARY

In a first aspect of the present disclosure, an interlocking apparatus for a drawer cabinet is provided. The interlocking apparatus comprises a locking mechanism arranged within a drawer of the drawer cabinet and comprising: a bracket coupled to the drawer; a driving plate movably coupled to the bracket and adapted to slide in a first direction between a locking position and an unlocking position; and a locking plate coupled to the driving plate and slidably connected to the bracket in a second direction to slide in the second direction and exit a locking hole of a fixing portion of the drawer cabinet during sliding of the driving plate from the locking position to the unlocking position, wherein the second direction forms a predetermined non-zero angle with the first direction ; and a limiting mechanism arranged within the drawer and located between a handle of the drawer and the locking mechanism, the limiting mechanism being adapted to limit the locking plate from exiting the locking hole during the handle being in a closing position, the limiting mechanism comprising: a fixing plate coupled to the drawer; a cam crank arm coupled to the handle of the drawer and adapted to rotate with the handle between an opening position and the closing position; and a limiting member coupled to the fixing plate, and adapted to be driven by the cam crank arm to move, during rotation of the cam crank arm from the opening position to the closing position, to limit the driving plate from sliding to the unlocking position.

In some embodiments, the locking mechanism further comprises: at least one first sliding hole formed on the bracket, an axis of the at least one first sliding hole extending in the first direction, the at least one first sliding hole partially accommodating the driving plate to allow the driving plate to slide between the locking position and the unlocking position within the first sliding hole in the first direction.

In some embodiments, the locking mechanism further comprises: at least one second sliding hole formed on the bracket, an axis of the at least one second sliding hole extending in the second direction, the at least one second sliding hole being adapted to at least partially accommodate the locking plate to allow the locking plate to slide in the second direction within the second sliding hole.

In some embodiments, the locking mechanism further comprises: a first slideway formed on the driving plate and comprising a locking end and an unlocking end, a distance from the unlocking end to the fixing portion exceeding a distance from the locking end to the fixing portion; and a first step screw arranged within the first slideway and coupled to the locking plate, the first step screw being adapted to move from the locking end to the unlocking end of the first slideway during sliding of the driving plate from the locking position to the unlocking position to drive the locking plate to exit the locking hole.

In some embodiments, the locking mechanism further comprises: a spring, one end of which is coupled to the driving plate and the other end of which is coupled to the bracket.

In some embodiments, the cam crank arm comprises: a coupling portion; a driving hole formed in the coupling portion and coupled to a driving shaft of the handle of the drawer, the driving hole being adapted to rotate with the driving shaft; and a driving portion coupled to the coupling portion and adapted to extend in a radial direction perpendicular to an axis of the driving hole.

In some embodiments, the limiting member includes: the limiting member comprises: a first limiting plate movably coupled to the fixing plate and adapted to be driven by the cam crank arm to limit sliding of the driving plate to the unlocking position, the first limiting plate comprising: a first sliding portion slidably coupled to the fixing plate in a third direction; a first accommodating hole formed on the first sliding portion and adapted to allow the cam crank arm to partially pass through; and a first retaining portion coupled to a side of the first sliding portion facing the locking mechanism, to slide along the third direction with the first sliding portion, and to be stuck with the driving plate to limit the sliding of the driving plate to the unlocking position when the cam crank arm is located at the closing position.

In some embodiments, the first accommodating hole comprises: a first wall, arranged at one end close to the locking mechanism in the third direction and adapted to contact the cam crank arm during rotation of the cam crank arm from the opening position to the closing position; and a second wall arranged at one end away from the locking mechanism in the third direction and adapted to contact the cam crank arm during rotation of the cam crank arm from the closing position to the opening position.

In some embodiments, the limiting member comprises: a connecting member coupled to the driving plate and adapted to slide in a fourth direction during sliding of the driving plate from the locking position to the unlocking position, the fourth direction forms a predetermined third non-zero angle with the first direction; and a second limiting plate, movably coupled to the fixing plate and adapted to be driven by the cam crank arm to limit sliding of the connecting member along the fourth direction, the second limiting plate comprising: a second sliding portion slidably coupled to the fixing plate and adapted to slide in a fifth direction during rotation of the cam crank arm from the opening position to the closing position, wherein the fifth direction forms a predetermined fourth non-zero angle with the fourth direction; a second accommodating hole formed on the second sliding portion and coupled to the cam crank arm; and a second retaining portion coupled to the second sliding portion and adapted to slide along the fifth direction with the sliding portion, and coupled to the connecting member during the cam crank arm being in the closing position to limit the sliding of the connecting member along the fourth direction.

In some embodiments, the connecting member comprises: a connecting arm coupled to the bracket and slidably connected to the bracket along the fourth direction; a second slideway formed on the connecting arm and comprising a shielding end and an avoidance end; and a second step screw arranged in the second slideway and coupled with the driving plate, so as to move from the shielding end to the avoidance end of the second slideway to drive the connecting arm to slide in the fourth direction during the sliding of the driving plate from the locking position to the unlocking position.

In some embodiments, the connecting member further comprises: a retaining groove formed on a side of the connecting arm facing the second limiting plate and extending in the fifth direction to allowed the second retaining portion to be recessed in.

In some embodiments, the connecting member further comprises: a shield portion coupled to the connecting arm and adapted to expose at least a handle socket of the drawer during movement of the driving plate from the locking position to the unlocking position.

In some embodiments, the second accommodatinghole comprises: a third wall, arranged at one end of the second accommodating hole in the fifth direction, and adapted to contact the cam crank arm during rotation of the cam crank arm from the opening position to the closing position; and a fourth wall arranged at the other end of the second accommodating hole relative to the one end in the fifth direction and adapted to contact the cam crank arm during the cam crank arm being in the closing position.

According to some embodiments of the present disclosure, the locking mechanism can fix the drawer and the fixing portion, and the limiting mechanism coupled to the handle of the drawer can limit the movement of the locking mechanism during closing of the handle, so that the drawer and the fixing portion remain fixed during closing of the drawer, thereby the electrical safety of the drawer cabinet can be improved.

In a second aspect of the present disclosure, a drawer cabinet is provided. The drawer cabinet comprises a cabinet body; a fixing portion fixedly coupled to the cabinet body; a drawer disposed on the fixing portion and slidably connected to the fixing portion; and the interlocking apparatus of the first aspect of the present discolsure coupled to the drawer to interlock the drawer and the fixing portion during closing of the drawer.

It should be understood that content described in this content section is not intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of various embodiments of the present disclosure will become more apparent with reference to the following detailed description taken in conjunction with the accompanying drawings. In the drawings, the same or similar reference numerals denote the same or similar elements, wherein:
FIG. 1 illustrates a partial structural schematic view of a drawer cabinet according to some embodiments of the present disclosure;
FIG. 2A illustrates a schematic view of an interlocking apparatus in a closing state according to some embodiments of the present disclosure;
FIG. 2B illustrates a schematic view of an interlocking apparatus in an opening-locked state according to some embodiments of the present disclosure;
FIG. 2C illustrates a schematic view of an interlocking apparatus in an opening-unlocked state according to some embodiments of the present disclosure;
FIG. 3A illustrates a schematic view of an interlocking apparatus in a closing state according to some other embodiments of the present disclosure;
FIG. 3B illustrates a schematic view of an interlocking apparatus in an opening-locked state according to some other embodiments of the present disclosure;
FIG. 3C illustrates a schematic view of an interlocking apparatus in an opening-unlocked state according to some other embodiments of the present disclosure;
FIG. 4A illustrates a schematic view of a locking mechanism in a locking state according to some embodiments of the present disclosure;
FIG. 4B illustrates a schematic view of a locking mechanism in an unlocking state according to some embodiments of the present disclosure;
FIG. 4C illustrates a schematic view of a locking mechanism at other perspectives according to some embodiments of the present disclosure;
FIG. 5A illustrates a schematic view of a limiting mechanism during the drawer is in the closing state according to some embodiments of the present disclosure;
FIG. 5B illustrates a schematic view of a limiting mechanism during the drawer is in the opening state according to some embodiments of the present disclosure;
FIG. 5C illustrates an exploded view of a limiting mechanism according to some embodiments of the present disclosure;
FIG. 6 illustrates a schematic view of an overall structure of a cam crank arm according to some embodiments of the present disclosure;
FIG. 7A illustrates a schematic view of a locking mechanism in a locking state according to some other embodiments of the present disclosure;
FIG. 7B illustrates a schematic view of a locking mechanism in an unlocking state according to some other embodiments of the present disclosure;
FIG. 7C illustrates a schematic view of a locking mechanism at other perspectives according to some other embodiments of the present disclosure;
FIG. 8A illustrates a schematic view of a limiting mechanism in a closing state in a drawer according to some embodiments of the present disclosure;
FIG. 8B illustrates a schematic view of a limiting mechanism in an opening state in a drawer according to some embodiments of the present disclosure; and
FIG. 8C illustrates an exploded view of a limiting mechanism according to some embodiments of the present disclosure.

### DETAILED DESCRIPTION

Embodiments of the present disclosure will be described in more detail below with reference to the accompanying drawings. While certain embodiments of the disclosure are illustrated in the drawings, it should be understood that the present disclosure may be embodied in various forms and should not be construed as limited to the embodiments set forth herein, but rather, these embodiments are provided for a thorough and complete understanding of the present disclosure. It should be understood that the drawings and embodiments of the present disclosure are only used for example, and are not intended to limit the protection scope of the present disclosure.

It should be noted that the headings of any section / subsection provided herein are not limiting. Various embodiments are described throughout herein, and any type of embodiment can be included under any section / subsection. Further, embodiments described in any section / subsection may be combined in any manner with any other embodiments described in the same section / subsection and / or different section / subsection.

In the description of the embodiments of the present disclosure, the term "comprising" and similar terms thereof should be understood as open-ended inclusion, that is, "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," etc. may refer to different or identical objects. Other explicit and implicit definitions may also be included below.

As mentioned briefly above, in conventional technology, some drawers of drawer cabinets are arranged on the fixing portion of the drawer cabinet and are adapted to slide relative to the fixing portion in a depth direction perpendicular to the user side. If a drawer slides relative to the fixing portion to a predetermined position (for example, an operation position), the wire-inlet end and / or the wire-outlet end of the drawer facing away from the user can be coupled to a corresponding wire-outlet mechanism and / or wire-inlet mechanism in the drawer cabinet. In this state, the user can operate the closing handle of the drawer to perform the closing operation. In order to ensure electrical safety during operation of the drawer cabinet, the drawer and the fixing portion need to be fixed to each other during closing of the drawer. That is, the closing state of the drawer is interlocked with the sliding state of the drawer relative to the fixing portion. The existing interlocking apparatus is complex in structure, and it is cumbersome for the user to operate the interlocking apparatus during the release of the interlock.

Embodiments of the present disclosure provide an interlocking apparatus for the drawer cabinet and a drawer cabinet to solve or at least partially solve the above mentioned problems and other potential problems existing in conventional solutions. According to embodiments of the present disclosure, the interlocking apparatus for the drawer cabinet fixes the drawer and the fixing portion through the locking mechanism, and the limiting mechanism coupled to the handle of the drawer can limit the movement of the locking mechanism during closing of the handle, so that the drawer and the fixing portion remain fixed during closing of the drawer, and the electrical safety of the drawer cabinet can be improved.

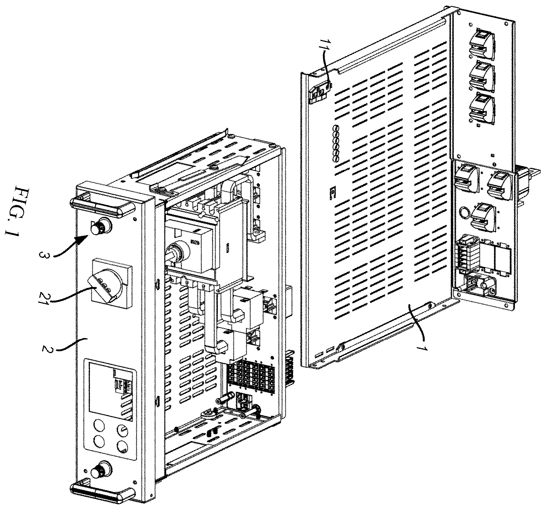

FIG. 1 illustrates a partial structural schematic view of a drawer cabinet according to some embodiments of the present disclosure. As shown in FIG. 1, the drawer cabinet generally includes a cabinet body frame, at least one fixing portion 1 coupled to the cabinet body frame, and at least one drawer 2 coupled to the fixing portion 1. In some embodiments, the drawer cabinet can include a plurality of fixing portions 1, and the plurality of fixing portions 1 are arranged in the cabinet body frame along the gravity direction. A predetermined interval is reserved between two adjacent fixing portions 1, and the plurality of drawers 2 can be respectively arranged in the interval between two adjacent fixing portions 1. The drawer 2 is coupled to the fixed portion 1 and adapted to slide relative to the fixed portion 1 in a depth direction close to or away from the user. In some embodiments, the drawer 2 can slide relative to the fixed portion 1 to a plurality of predetermined positions (for example, operation positions, detection positions, or disconnection positions) of the drawer 2, to implement corresponding functions at different predetermined positions. For example, the drawer 2 can be coupled to the wire-inlet mechanism and / or the wire-outlet mechanism in the drawer cabinet at the operation position, so that after the drawer 2 is closed, the drawer 2 can distribute power of the wire-inlet mechanism to the corresponding wire-outlet mechanism.

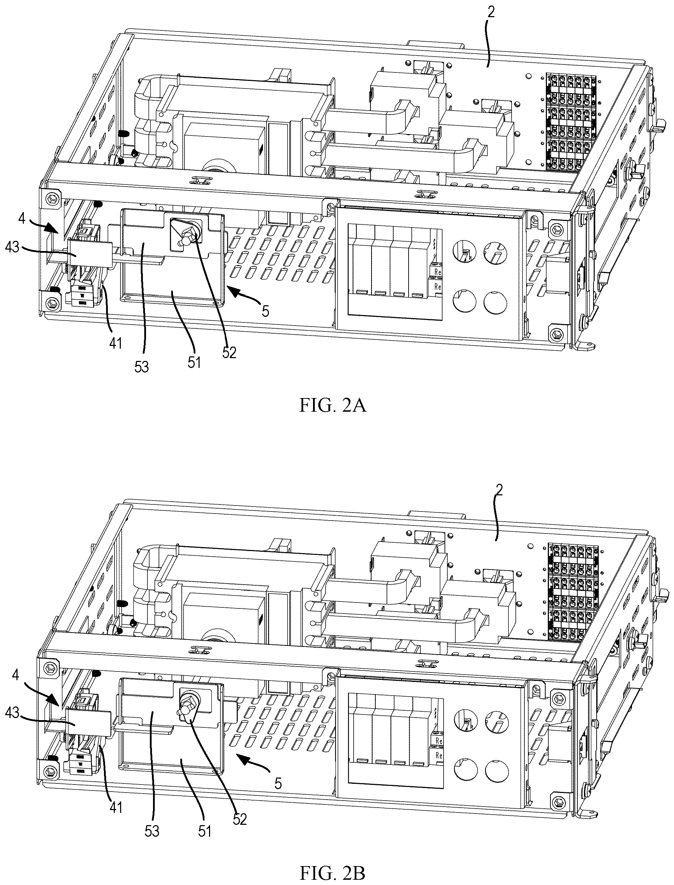

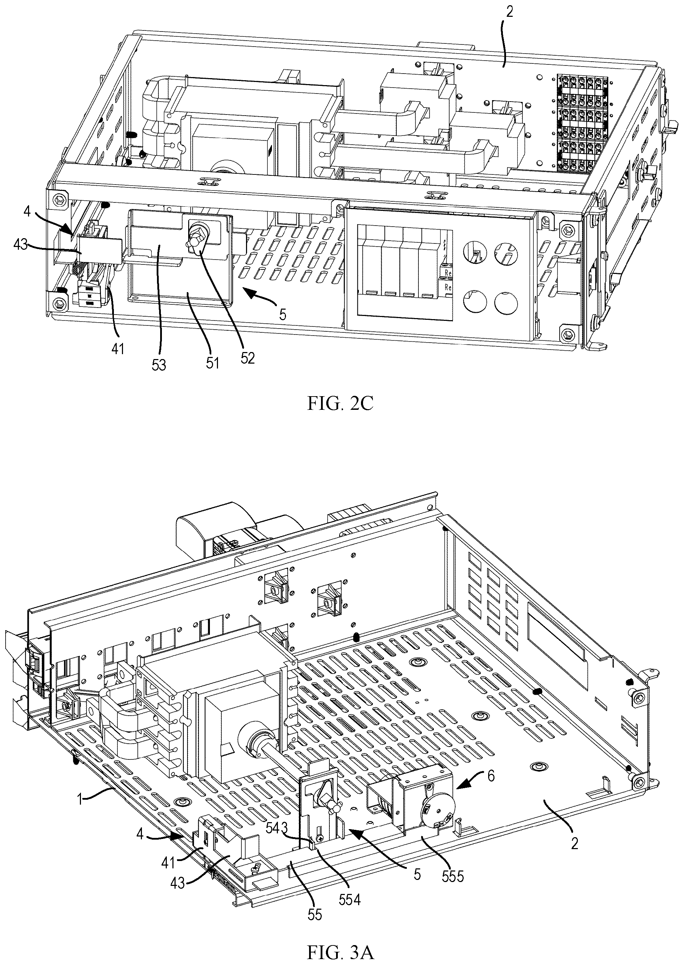

FIGS. 2A-2C respectively show schematic views of the interlocking apparatus in different operation states according to some embodiments of the present disclosure, and FIGS. 3A-3C respectively show schematic views of the interlocking apparatus in different operation states according to some other embodiments of the present disclosure, as shown in FIGS. 2A-2C and FIGS. 3A-3C, an interlocking apparatus 3 is further provided inside the drawer 2. The interlocking apparatus 3 is adapted to interlock the closing state of the drawer 2 and the locking state between the drawer 2 and the fixing portion 1 during closing of the drawer 2. Specifically, the interlocking apparatus 3 generally includes a locking mechanism 4 for locking the drawer 2 and the fixing portion 1, and a limiting mechanism 5 arranged between the handle 21 of the drawer 2 and the locking mechanism 4. The limiting mechanism 5 is adapted to be contact with the locking mechanism 4 during the handle 21 being in the closing position, and to limit the locking mechanism 4 from operating to maintain the locking state of the drawer 2 and the fixing portion 1.

FIG. 2A shows a schematic view of an interlocking apparatus in a closing state according to some embodiments of the present disclosure, and FIG. 3A shows a schematic view of an interlocking apparatus in a closing state according to some other embodiments of the present disclosure. As shown in FIGS. 2A and 3A, if the drawer 2 is in the operation position, the locking mechanism 4 can lock the drawer 2 with the fixing portion 1 to limit sliding of the drawer 2 relative to the fixing portion 1. Therefore, it is ensured that the drawer 2 and the drawer 2 are stably connected after the drawer 2 is closed. On this basis, the limiting mechanism 5 can restrict the locking mechanism 4 to limit unlocking of the drawer 2 and the fixing portion 1.

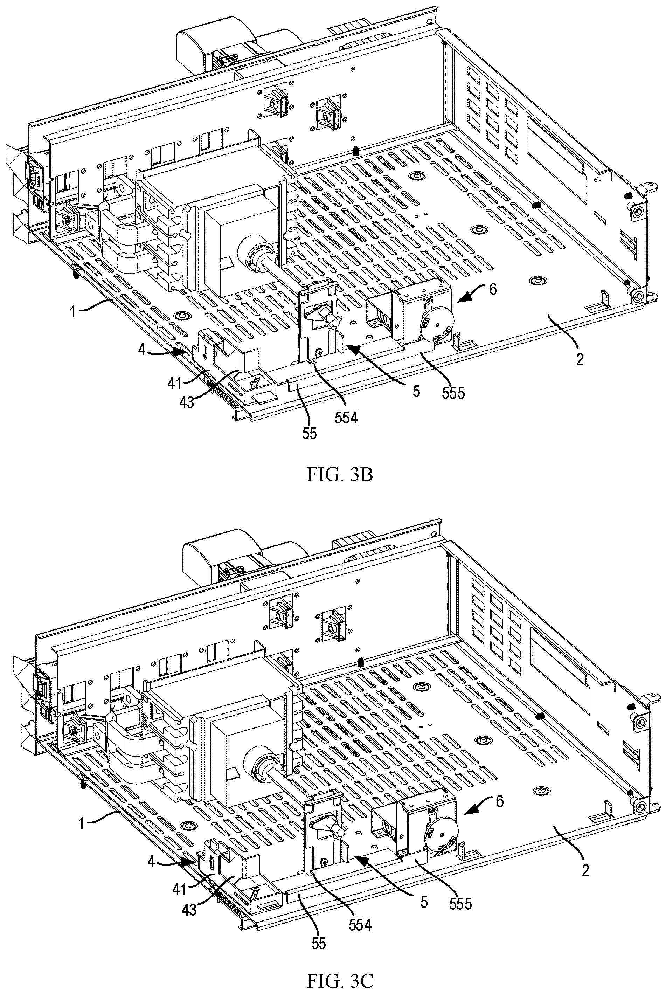

FIG. 2B illustrates a schematic view of the interlocking apparatus 3 in an opening-locked state according to some embodiments of the present disclosure, and FIG. 3B illustrates a schematic view of the interlocking apparatus 3 in an opening-locked state according to some other embodiments of the present disclosure. As shown in FIG. 2B and FIG. 3B, the user can operate the handle 21 of the drawer 2 (for example, rotate the handle 21 of the drawer 2 around a fixed axis) to switch the operation state of the drawer 2 from closing to opening. Currently, although the locking mechanism 4 still keeps locking the drawer 2 and the fixing portion 1, the limiting mechanism 5 releases the limitation on the operation of the locking mechanism 4. The user can operate the locking mechanism 4 as needed to unlock the drawer 2 from the fixing portion 1.

FIG. 2C shows a schematic view of an interlocking apparatus in an opening-unlocked state according to some embodiments of the present disclosure, and FIG. 3C shows a schematic view of an interlocking apparatus in an opening-unlocked state according to some other embodiments of the present disclosure. As shown in FIGS. 2C and 3C, the user can operate the locking mechanism 4 and unlock the drawer 2 and the fixing portion 1, so that the drawer 2 can slide between different positions relative to the fixing portion 1.

In addition, in some embodiments, if the locking mechanism 4 is in the unlocking state, the locking mechanism 4 can also be coupled to the limiting mechanism 5 to limit closing of the drawer 2. The locking mechanism 4 and the limiting mechanism 5 will be described in more detail below.

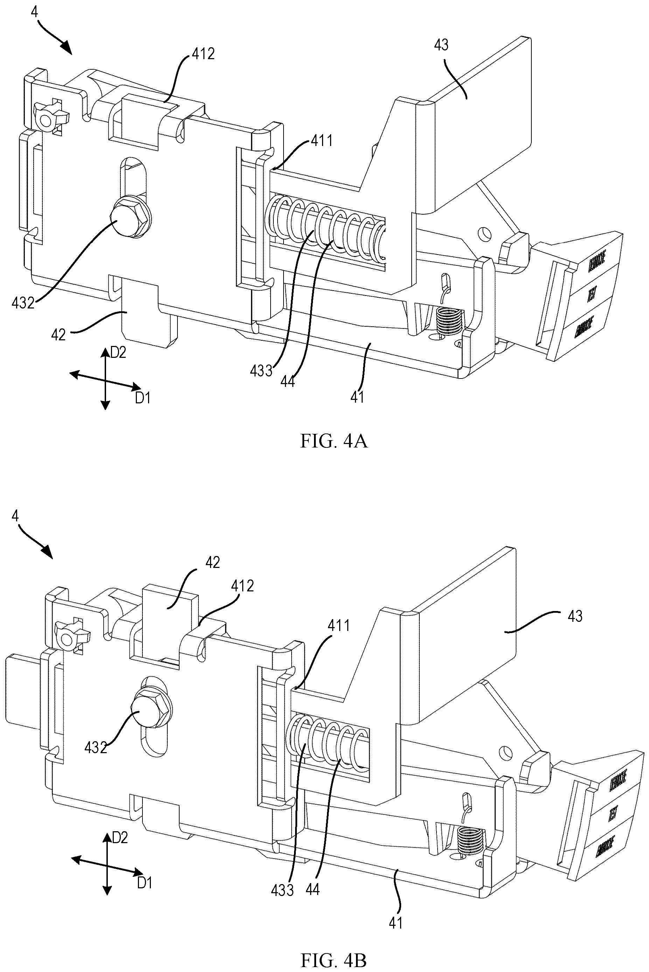

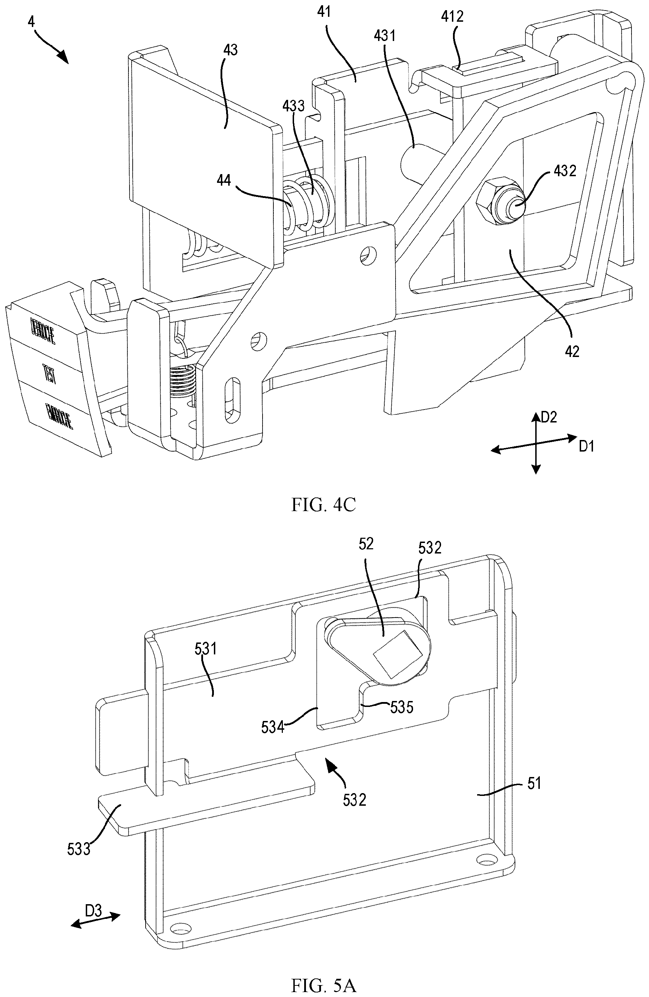

FIG. 4A and FIG. 4B respectively illustrate schematic views of a locking mechanism in a locking state and an unlocking state according to some embodiments of the present disclosure, and FIG. 4C illustrates a schematic view of the locking mechanism in other perspectives according to some embodiments of the present disclosure. As shown in FIGS. 4A to 4C, the locking mechanism 4 includes a bracket 41 arranged in the drawer 2 and coupled to a bottom surface of the drawer 2 facing the fixing portion 1. The bracket 41 is provided with a locking plate 42, the locking plate 42 is slidably connected to the bracket 41 along a second direction D2, and the second direction D2 has a non-zero angle with the plane where the bottom surface is located. A fixing hole 11 is formed on a side of the fixing portion 1 facing the drawer 2. One end of the locking plate 42 can pass through the bottom surface of the drawer 2 and at least partially insert into the fixing hole 11 during the locking plate 42 sliding toward the fixing portion 1 along the second direction D2. In this way, the locking plate 42 can fix the drawer 2 with the fixing portion 1.

In some embodiments, at least one second sliding hole 412 is formed on the bracket 41, the axis of the at least one second sliding hole 412 extends along the second direction D2. The locking plate 42 is inserted into the at least one second sliding hole 412. The locking plate 42 can slide along the second direction D2 under the restriction of at least one second sliding hole 412. In some embodiments, two second sliding holes 412 are formed on the bracket 41, the two second sliding holes 412 are aligned in the axial direction, and the locking plate 42 passes through the two second sliding holes 412 simultaneously.

In some embodiments, a plurality of fixing holes 11 are formed on the fixing portion 1, the plurality of fixing holes 11 are arranged along a depth direction of the drawer 2, and the plurality of fixing holes 11 respectively correspond to a plurality of predetermined positions (for example, an operation position, a detection position, and a disconnection position) of the drawer 2. Thus, the locking plate 42 can fix the drawer 2 in multiple positions of the fixing portion 1.

The bracket 41 is slidably connected to the driving plate 43 along the first direction D1, and the driving plate 43 can slide from the locking position to the unlocking position along the first direction D1 under the user's operation. In some embodiments, the first direction D1 in which the driving plate 43 slides can be parallel to the movement direction (i.e., depth direction) of the drawer 2 relative to the fixing portion 1. In some embodiments, at least one first sliding hole 411 is formed on the bracket 41. An axis of the at least one first sliding hole 411 extends along the first direction D1, and the driving plate 43 partially passes through the first sliding hole 411, so that the driving plate 43 can slide along the first direction D1 under the limitation of the first sliding hole 411. In some embodiments, two first sliding holes 411 are formed on the bracket 41, the two first sliding holes 411 are aligned to each other on the axis, and the driving plate 43 passes through the two first sliding holes 411 respectively and slides relative to the bracket 41 in the first direction D1.

The driving plate 43 is coupled to the locking plate 42. The first direction D1 in which the driving plate 43 slides forms a predetermined non-zero angle with the second direction D2 in which the locking plate 42 slides. When the user operates the driving plate 43 to slide from the locking position to the unlocking position, the driving plate 43 can drive the locking plate 42 to slide towards and enable the locking plate 42 to exit the fixing hole 11, so as to release the locking of the drawer 2 and the fixing portion 1. Specifically, a first slideway 431 is formed on the driving plate 43, and the first slideway 431 includes a locking end and an unlocking end. A distance from the unlocking end to the fixing portion 1 exceeds a distance from the locking end to the fixing portion 1. A first step screw 432 is arranged within the first slideway 431, and coupled to the locking plate 42. Thus, during the sliding of the driving plate 43 from the locking position to the unlocking position, the first step screw 432 moves from the locking end to the unlocking end of the first slideway 431. Through the contact between the inner wall of the first slideway 431 and the first step screw 432, the locking plate 42 is driven to move in the second direction D2, and the driving plate 43 exits the fixing hole 11, thereby unlocking the locking mechanism 4 from locking the drawer 2 and the fixing portion 1.

In some embodiments, the locking mechanism 4 further includes a spring 44 arranged between the bracket 41 and the driving plate 43, and adapted to provide an elastic force to the driving plate 43, so that the driving plate 43 can be maintained in the locking position during the user's operation. For example, the spring 44 can be compressed during sliding of the driving plate 43 from the locking position to the unlocking position under the user's operation. After the user's operation ends, the spring 44 pushes the driving plate 43 to return from the unlocking position to the locking position. In some embodiments, the driving plate 43 includes a mounting column 433 extending in the first direction D1, the spring 44 is sleeved on the mounting column 433, and an end of the spring 44 abuts against the bracket 41.

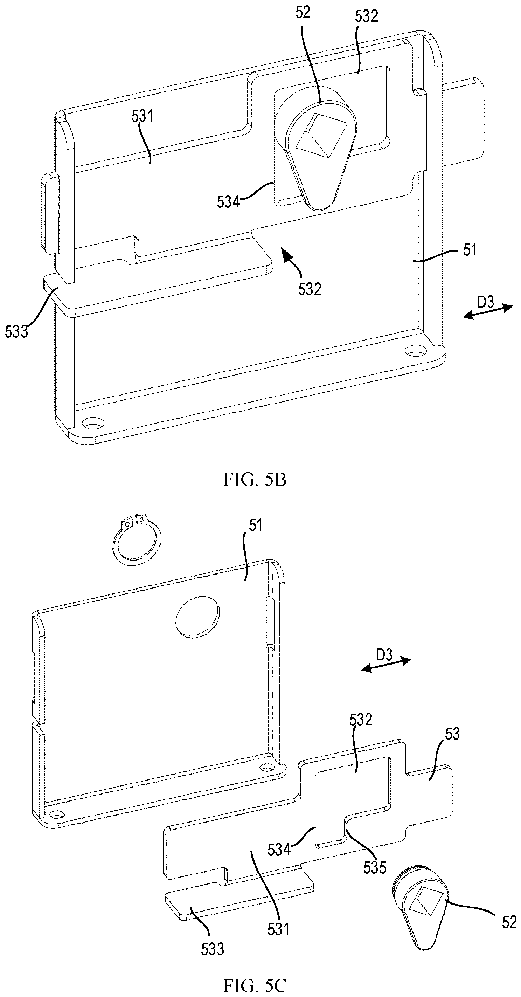

FIGS. 5A-5C respectively show schematic views of a limiting mechanism according to some embodiments of the present disclosure, wherein FIG. 5A shows a schematic view of the limiting mechanism in a closing state in a drawer according to some embodiments of the present disclosure, FIG. 5B shows a schematic view of the limiting mechanism in an opening state in a drawer according to some embodiments of the present disclosure, and FIG. 5C shows an exploded view of the limiting mechanism according to some embodiments of the present disclosure. As shown in FIGS. 5A-5C, the limiting mechanism 5 includes a fixing plate 51 coupled to the drawer 2, a cam crank arm 52 pivotally arranged on the fixing plate 51, and a limiting member slidably connected to the fixing plate 51. The cam crank arm 52 is coupled to the handle 21 of the drawer 2 and is adapted to rotate about an axis between the closing and opening positions with the closing and opening operations of the handle 21. When the cam crank arm 52 rotates along with the handle 21 from the opening position to the closing position, the limiting member is driven by the cam crank arm 52 to displace, thereby limiting the locking mechanism 4 to perform the unlocking action.

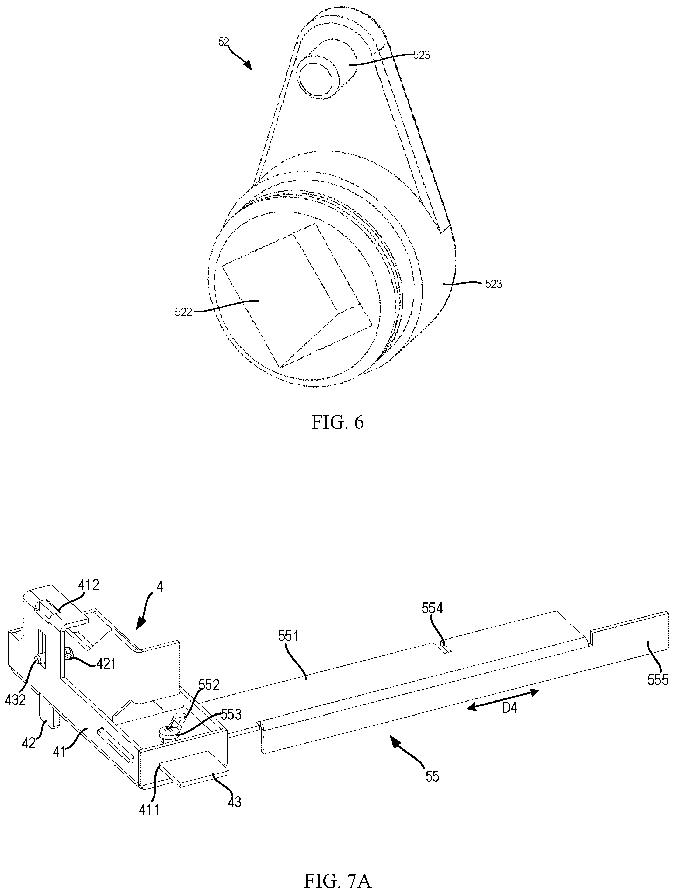

As shown in FIG. 6, in some embodiments, the cam crank arm 52 includes a coupling portion 521, a driving hole 522 formed in the coupling portion 521, and a driving portion 523 coupled to the coupling portion 521. The coupling portion 521 is arranged on the fixing plate 51 and is adapted to rotate about an axis relative to the fixing plate 51. The driving hole 522 is axially aligned with the coupling portion 521. The driving hole 522 is adapted to allow the driving shaft of the handle 21 to pass through and to be driven by the driving shaft to rotate the coupling portion 521 around the axis. The driving portion 523 is arranged on a side deviated from the axis of driving hole 522 and extends in a radial direction perpendicular to the axis.

Referring back to FIG. 5C, as shown in FIG. 5C, in some embodiments, the limiting member includes a first limiting plate 53, and the first limiting plate 53 is movably coupled to the fixing plate 51 and coupled to the driving portion 523 of the cam crank arm 52 to slide relative to the fixing portion 1 in the third direction D3 under the driving of the cam crank arm 52. The first limiting plate 53 includes a first sliding portion 531, a first accommodating hole 532 formed on the first sliding portion 531, and a first retaining portion 533 coupled to a side of the first sliding portion 531 facing the locking mechanism 4. The first sliding portion 531 partially penetrates through the fixing plate 51 and is adapted to be slidably connected to the fixing plate 51 along the third direction D3. The cam crank arm 52 is arranged in the first accommodating hole 532, and as the cam crank arm 52 rotates around the axis, the driving portion 523 of the cam crank arm 52 contacts a corresponding side wall in the first accommodating hole 532 and pushes the first limiting plate 53 to slide along the third direction D3.

In some embodiments, the first accommodating hole 532 includes a first wall 534 and a second wall 535. The first wall 534 is arranged at an end of the third direction D3 close to the locking mechanism 4, and is adapted to contact the cam crank arm 52 during rotation of the cam crank arm 52 from the opening position to the closing position. The cam crank arm 52 pushes the first wall 534 to drive the first limiting plate 53 to slide toward the locking mechanism 4 along the third direction D3, so that the first retaining portion 533 of the first limiting plate 53 moves to a path where the driving plate 43 slides from the locking position to the unlocking position. In this way, the first retaining portion 533 can limit the sliding of the driving plate 43 to the unlocking position, thereby limiting the unlocking of the locking mechanism 4.

The second wall 535 is arranged at an end away from the locking mechanism 4 in the third direction D3 and is adapted to contact the cam crank arm 52 during rotation of the cam crank arm 52 from the closing position to the opening position. When the cam crank arm 52 rotates from the closing position to the opening position, the cam crank arm 52 pushes the second wall 535 and drives the first limiting plate 53 to move away from the locking mechanism 4 along the third direction D3. In this way, the first retaining portion 533 of the first limiting plate 53 can avoid the path for the driving plate 43 to slide from the locking position to the unlocking position. That is, the locking mechanism 4 can unlock the drawer 2 and the fixing portion 1 under the operation of the user. In some embodiments, if the locking mechanism 4 is in the unlocking state, the driving plate 43 can contact the first retaining portion 533 of the first limiting plate 53 and limit the sliding of the first limiting plate 53 to the locking mechanism 4, thereby limiting the rotation of the cam crank arm 52 from the opening position to the closing position.

In this way, the interlocking apparatus 3 realizes the interlocking between the locking state of the drawer 2 and the fixing portion 1 and the closing state of the handle 21 of the drawer 2 through the locking mechanism 4 and the limiting mechanism 5. During the closing state of the drawer 2, the drawer 2 and the fixing portion 1 can remain fixed, thereby improving electrical safety during operation of the drawer 2. Moreover, during the installation of the drawer 2 to the predetermined position (during the installation of the drawer 2 to the predetermined position, the locking mechanism 4 needs to be kept in an unlocking state), it is ensured that the drawer 2 is in the closing position, thereby improving the safety of operation and maintenance of the drawer 2.

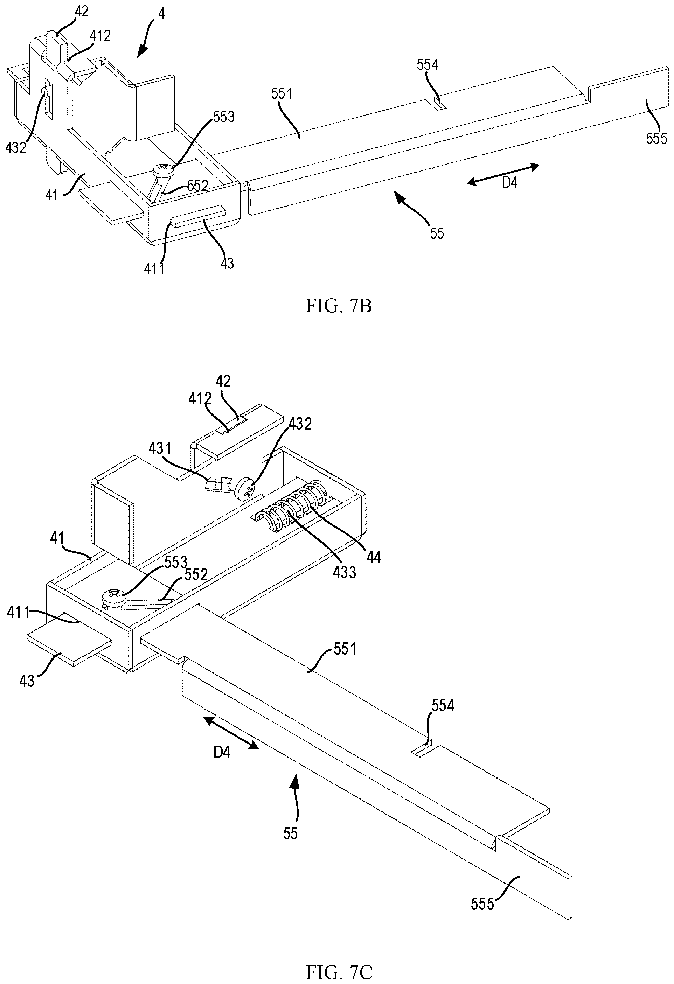

FIG. 7A and FIG. 7B respectively show schematic views of a locking mechanism in a locking state and an unlocking state according to some other embodiments of the present disclosure, and FIG. 7C shows a schematic view of the locking mechanism in other perspectives according to some other embodiments of the present disclosure. In some embodiments, the locking mechanism 4 can also be a structure as shown in FIGS. 7A-7C. As shown in FIGS. 7A-7C, the bracket 41 of the locking mechanism 4 is coupled to the bottom of the drawer 2, and the driving plate 43 is coupled to the bracket 41 through two first sliding holes 411 formed in the bracket 41 and slidably connected to the bracket 41 along the first direction D1. The locking plate 42 is coupled to the bracket 41 through two second sliding holes 412 formed on the bracket 41 and slidably connected to the bracket 41 in the second direction D2.

One side of the driving plate 43 facing the bracket 41 is provided with a first slideway 431, a first step screw 432 is arranged in the first slideway 431, and the first step screw 432 is coupled to the locking plate 42. In this way, during sliding of the driving plate 43 from the locking position to the unlocking position, the first step screw 432 slides from the locking end to the unlocking end of the first slideway 431, so that the first step screw 432 drives the locking plate 42 to exit the fixing hole 11. A mounting column 433 is integrally formed on the driving plate 43, and the spring 44 is sleeved on the mounting column 433 and abuts against the bracket 41. The spring 44 can provide an elastic force between the bracket 41 and the driving plate 43 such that the driving plate 43 can remain in the locking position without the user's operation. Therefore, the locking stability of the locking mechanism 4 for locking the drawer 2 and the fixing portion 1 can be improved.

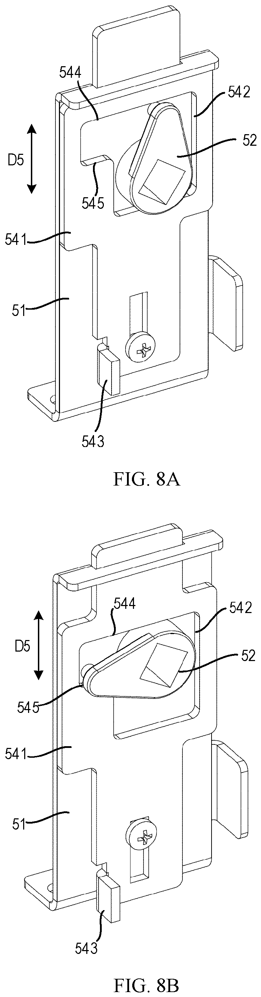

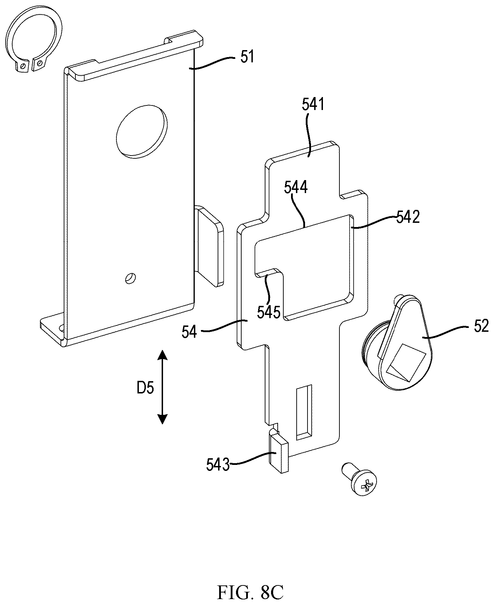

FIGS. 8A-8C respectively illustrate schematic views of a limiting mechanism according to some other embodiments of the present disclosure, wherein FIG. 8A illustrates a schematic view of the limiting mechanism in a closing state in a drawer according to some embodiments of the present disclosure, FIG. 8B illustrates a schematic view of the limiting mechanism in an opening state in a drawer according to some embodiments of the present disclosure, and FIG. 8C illustrates an exploded view of the limiting mechanism according to some embodiments of the present disclosure. As shown in FIGS. 8A-8C, in some embodiments, the limiting member includes a connecting member 55 coupled to the locking mechanism 4 and a second limiting plate 54 coupled to the fixing plate 51.

The connecting member 55 is adapted to slide along the fourth direction D4 under the driving of the locking plate 42 of the locking mechanism 4. The second limiting plate 54 is adapted to move along the fifth direction D5 under the driving of the cam crank arm 52. The second limiting plate 54 can also be coupled with the connecting member 55 and limit the sliding of the connecting member 55 along the fourth direction D4 after the cam crank arm 52 rotates to the closing position, thereby limiting the unlocking of the locking mechanism 4.

As shown in FIGS. 7A-7C, in some embodiments, the connecting member 55 includes a connecting arm 551, and the connecting arm 551 partially passes through the bracket 41 of the locking mechanism 4 and slides relative to the bracket 41 along the fourth direction D4. A second slideway 552 is formed on the connecting arm 551, the second slideway 552 includes a shielding end and an avoiding end. An extending direction of the second slideway 552 from the shielding end to the avoiding end has a predetermined non-zero angle with both the first direction D1 in which the driving plate 43 slides and the fourth direction D4 in which the connecting arm 551 slides. A second step screw 553 is further arranged in the second slideway 552, and the second step screw 553 is coupled to the driving plate 43, so that when the driving plate 43 slides from the locking position to the unlocking position, the second step screw 553 moves from the shielding end to the avoidance end of the second slideway 552, and drives the connecting arm 551 to slide along the first direction D1. The connecting arm 551 is further provided with a retaining groove 554 extending along the fifth direction D5.

As shown in FIGS. 8A-8C, in some embodiments, the second limiting plate 54 includes a second sliding portion 541, a second accommodating hole 542 formed on the second sliding portion 541, and a second retaining portion 543. The second accommodating hole 542 is adapted to at least partially accommodate the cam crank arm 52 and contact the cam crank arm 52 during rotation of the cam crank arm 52 between the closing position and the opening position, and drive the second limiting plate 54 to slide along the fifth direction D5.

Specifically, the second accommodating hole 542 includes a third wall 544. The third wall 544 is arranged at one end of the second accommodating hole 542 along the fifth direction D5, and is adapted to be contact with the cam crank arm 52 during the rotation of the cam crank arm 52 from the opening position to the closing position, so that the second limiting plate 54 is driven to slide along the fifth direction D5 based on the pushing of the cam crank arm 52. The second retaining portion 543 of the second limiting plate 54 is inserted into the retaining groove 554 of the connecting member 55. The sliding of the connecting member 55 in the fourth direction D4 is limited by the cooperation of the second retaining portion 543 and the retaining groove 554, so that the locking mechanism 4 cannot perform the unlocking operation.

The second accommodating hole 542 further includes a fourth wall 545. The fourth wall 545 is arranged at the other end of the second accommodating hole 542 along the fifth direction D5 and is adapted to contact the cam crank arm 52 when the cam crank arm 52 is in the closing position. The second limiting plate 54 is driven to slide along the fifth direction D5 by the pushing of the cam crank arm 52 against the fourth wall 545, and the second retaining portion 543 exits the retaining groove 554 of the connecting member 55, thereby releasing the limiting of the limiting member on the connecting member 55.

In addition, when the locking mechanism 4 is in the unlocking state, the second retaining portion 543 of the second limiting plate 54 cannot enter the retaining groove 554 along the fifth direction D5, thereby achieving that the drawer 2 cannot perform the closing operation during the drawer 2 being in the unlocked state.

Referring back to FIGS. 3A-3C, in some embodiments, a rocker mechanism 6 is further arranged in the drawer 2, and the rocker mechanism 6 includes a spiral groove cam arranged in the drawer 2 and a driving member coupled to the fixing portion 1. The spiral groove cam can rotate around the axis under the driving of the handle 21. a driving groove is formed in one side, facing the spiral groove cam, of the driving part, and the driving groove is in threaded fit with the spiral groove of the spiral groove cam. The drawer 2 is further provided with a handle insertion hole into which the handle 21 is inserted and coupled with the spiral groove cam, so that after the handle 21 is inserted into the handle insertion hole and coupled with the spiral groove cam, the spiral groove cam rotates around the axis, and the drawer 2 slides relative to the fixing portion 1 through the cooperation of the driving member and the spiral groove cam.

Accordingly, the connecting member 55 further includes a shield portion 555 coupled to the connecting arm 551 and adapted to shield the handle insertion hole from insertion of the handle 21 into the handle insertion hole during the locking state of the locking mechanism 4. In this way, the drawer 2 and the fixing portion 1 can be further locked, thereby improving reliability of coupling with the fixing portion 1 during closing of the drawer 2.

Implementations of the present disclosure have been described above, and the above description is exemplary, not exhaustive, and is not limited to the disclosed implementations. Many modifications and alterations will be apparent to those of ordinary skill in the art without departing from the scope and spirit of the illustrated implementations. The selection of terms as used herein is intended to best explain the principles of various implementations, practical applications or improvements to technology in the market, or to enable others of ordinary skill in the art to understand various implementations disclosed herein.

## Claims

1. An interlocking apparatus for a drawer cabinet, **characterized by** comprising:
a locking mechanism (4) arranged within a drawer (2) of the drawer cabinet and comprising:
a bracket (41) coupled to the drawer (2);
a driving plate (43) movably coupled to the bracket (41) and adapted to slide in a first direction (D1) between a locking position and an unlocking position; and
a locking plate (42) coupled to the driving plate (43) and slidably connected to the bracket (41) in a second direction (D2) to slide in the second direction (D2) and exit a locking hole of a fixing portion (1) of the drawer cabinet during sliding of the driving plate (43) from the locking position to the unlocking position, wherein the second direction (D2) forms a predetermined non-zero angle with the first direction (D1) ; and
a limiting mechanism (5) arranged within the drawer (2) and located between a handle (21) of the drawer (2) and the locking mechanism (4), the limiting mechanism (5) being adapted to limit the locking plate (42) from exiting the locking hole during the handle (21) being in a closing position, the limiting mechanism (5) comprising:
a fixing plate (51) coupled to the drawer (2);
a cam crank arm (52) coupled to the handle (21) of the drawer (2) and adapted to rotate with the handle (21) between an opening position and the closing position; and
a limiting member coupled to the fixing plate (51), and adapted to be driven by the cam crank arm (52) to move, during rotation of the cam crank arm (52) from the opening position to the closing position, to limit the driving plate (43) from sliding to the unlocking position.

2. The interlocking apparatus of claim 1, **characterized in that** the locking mechanism (4) further comprises:
at least one first sliding hole (411) formed on the bracket (41), an axis of the at least one first sliding hole (411) extending in the first direction (D1), the at least one first sliding hole (411) partially accommodating the driving plate (43) to allow the driving plate (43) to slide between the locking position and the unlocking position within the first sliding hole (411) in the first direction (D1).

3. The interlocking apparatus of claim 1, **characterized in that** the locking mechanism (4) further comprises:
at least one second sliding hole (412) formed on the bracket (41), an axis of the at least one second sliding hole (412) extending in the second direction (D2), the at least one second sliding hole (412) being adapted to at least partially accommodate the locking plate (42) to allow the locking plate (42) to slide in the second direction (D2) within the second sliding hole (412).

4. The interlocking apparatus of claim 1, **characterized in that** the locking mechanism (4) further comprises:
a first slideway (431) formed on the driving plate (43) and comprising a locking end and an unlocking end, a distance from the unlocking end to the fixing portion (1) exceeding a distance from the locking end to the fixing portion (1); and
a first step screw (432) arranged within the first slideway (431) and coupled to the locking plate (42), the first step screw (432) being adapted to move from the locking end to the unlocking end of the first slideway (431) during sliding of the driving plate (43) from the locking position to the unlocking position to drive the locking plate (42) to exit the locking hole.

5. The interlocking apparatus of claim 1, **characterized in that** the locking mechanism (4) further comprises:
a spring (44), one end of which is coupled to the driving plate (43) and the other end of which is coupled to the bracket (41).

6. The interlocking apparatus of claim 1, **characterized in that** the cam crank arm (52) comprises:
a coupling portion (521);
a driving hole (522) formed in the coupling portion (521) and coupled to a driving shaft of the handle (21) of the drawer (2), the driving hole (522) being adapted to rotate with the driving shaft; and
a driving portion (523) coupled to the coupling portion (521) and adapted to extend in a radial direction perpendicular to an axis of the driving hole (522).

7. The interlocking apparatus of any of claims 1-6,**characterized in that** the limiting member comprises:
a first limiting plate (53) movably coupled to the fixing plate (51) and adapted to be driven by the cam crank arm (52) to limit sliding of the driving plate (43) to the unlocking position, the first limiting plate (53) comprising:
a first sliding portion (531) slidably coupled to the fixing plate (51) in a third direction (D3);
a first accommodating hole (532) formed on the first sliding portion (531) and adapted to allow the cam crank arm (52) to partially pass through; and
a first retaining portion (533) coupled to a side of the first sliding portion (531) facing the locking mechanism (4), to slide along the third direction (D3) with the first sliding portion (531), and to be stuck with the driving plate (43) to limit the sliding of the driving plate (43) to the unlocking position when the cam crank arm (52) is located at the closing position.

8. The interlocking apparatus of claim 7, **characterized in that** the first accommodating hole comprises:
a first wall (534), arranged at one end close to the locking mechanism (4) in the third direction (D3) and adapted to contact the cam crank arm (52) during rotation of the cam crank arm (52) from the opening position to the closing position; and
a second wall (535) arranged at one end away from the locking mechanism (4) in the third direction (D3) and adapted to contact the cam crank arm (52) during rotation of the cam crank arm (52) from the closing position to the opening position.

9. The interlocking apparatus of any of claims 1-6 and 8, **characterized in that** the limiting member comprises:
a connecting member (55) coupled to the driving plate (43) and adapted to slide in a fourth direction (D4) during sliding of the driving plate (43) from the locking position to the unlocking position, the fourth direction (D4) forms a predetermined third non-zero angle with the first direction (D1); and
a second limiting plate (54), movably coupled to the fixing plate (51) and adapted to be driven by the cam crank arm (52) to limit sliding of the connecting member (55) along the fourth direction (D4), the second limiting plate (54) comprising:
a second sliding portion (541) slidably coupled to the fixing plate (51) and adapted to slide in a fifth direction (D5) during rotation of the cam crank arm (52) from the opening position to the closing position, wherein the fifth direction (D5) forms a predetermined fourth non-zero angle with the fourth direction (D4);
a second accommodating hole (542) formed on the second sliding portion (541) and coupled to the cam crank arm (52); and
a second retaining portion (543) coupled to the second sliding portion (541) and adapted to slide along the fifth direction (D5) with the sliding portion, and coupled to the connecting member (55) during the cam crank arm (52) being in the closing position to limit the sliding of the connecting member (55) along the fourth direction (D4).

10. The interlocking apparatus of claim 9, **characterized in that** the connecting member (55) comprises:
a connecting arm (551) coupled to the bracket (41) and slidably connected to the bracket (41) along the fourth direction (D4);
a second slideway (552) formed on the connecting arm (551) and comprising a shielding end and an avoidance end; and
a second step screw (553) arranged in the second slideway (552) and coupled with the driving plate (43), so as to move from the shielding end to the avoidance end of the second slideway (552) to drive the connecting arm (551) to slide in the fourth direction (D4) during the sliding of the driving plate (43) from the locking position to the unlocking position.

11. The interlocking apparatus of claim 10, **characterized in that** the connecting member (55) further comprises:
a retaining groove (554) formed on a side of the connecting arm (551) facing the second limiting plate (54) and extending in the fifth direction (D5) to allowed the second retaining portion (543) to be recessed in.

12. Theinterlocking apparatus of claim 10 or 11, **characterized in that** the connecting member (55) further comprises:
a shield portion (555) coupled to the connecting arm (551) and adapted to expose at least a handle socket of the drawer (2) during movement of the driving plate (43) from the locking position to the unlocking position.

13. The interlocking apparatus of claim 9, **characterized in that** the second accommodatinghole (542) comprises:
a third wall (544), arranged at one end of the second accommodating hole (542) in the fifth direction (D5), and adapted to contact the cam crank arm (52) during rotation of the cam crank arm (52) from the opening position to the closing position; and
a fourth wall (545) arranged at the other end of the second accommodating hole (542) relative to the one end in the fifth direction (D5) and adapted to contact the cam crank arm (52) during the cam crank arm (52) being in the closing position.

14. A drawer cabinet, **characterized by** comprising:
a cabinet body;
a fixing portion (1) fixedly coupled to the cabinet body;
a drawer (2) disposed on the fixing portion (1) and slidably connected to the fixing portion (1); and
the interlocking apparatus (3) of any of claims 1-13, coupled to the drawer (2) to interlock the drawer (2) and the fixing portion (1) during closing of the drawer (2).
